(19) Europäisches Patentamt
European Patent Office
Office européen des brevets

(11) Publication number: 0 399 642 A1

# (12) EUROPEAN PATENT APPLICATION

(21) Application number: 90303808.1

(22) Date of filing: 09.04.90

(51) Int. Cl.$^5$: C08G 18/65, C08G 18/66, C08G 18/50

(30) Priority: 21.04.89 GB 8909052

(43) Date of publication of application: 28.11.90 Bulletin 90/48

(84) Designated Contracting States: AT BE CH DE DK ES FR GB GR IT LI NL SE

(71) Applicant: ICI AMERICAS INC.
Concord Pike & New Murphy Road
Wilmington Delaware 19897(US)

(72) Inventor: Lin, I Sioun
Flat 804, La Hacienda
31-33 Mt. Kellett Road(HK)

(74) Representative: Baken, Philippus Johannes L. H. et al
Imperial Chemical Industries PLC Legal Department: Patents P.O. Box 6 Bessemer Road
Welwyn Garden City Herts. AL7 1HD(GB)

## (54) Structural molding compositions.

(57) Improved fiber reinforced structural products are made in a mold cavity containing reinforcing fibers by reaction injection of impingement mixed isocyananate reactive ingredients comprising a soft-block component, a chain extender selected from primary aromatic polyamines having at least one electron withdrawing group attached directly to the ring, secondary diamines, an isocyanurate formation catalyst and a polyisocyanate.

EP 0 399 642 A1

Xerox Copy Centre

# STRUCTURAL MOLDING COMPOSITIONS

## FIELD OF THE INVENTION

This invention relates to compositions of matter used to make molded objects by structural reaction injection molding and, in particular, to reinforced compositions comprising a polyisocyanurate-containing polymer which further comprises a hindered primary aromatic diamine and/or secondary diamine chain extender.

## BACKGROUND OF THE INVENTION

Structural reaction injection molding (SRIM) is known to the art. It includes processes wherein a continuous mat of reinforcing fibers is placed in a mold and a liquid reaction system is pumped through and around the mat, thereby forming a reinforced molded object once cured.

In the polyurethane/polyurea/polyamide/polyisocyanurate arts the liquid reaction systems result from an "A" component, a liquid stream containing a polyisocyanate, being impingement mixed with a "B" component, a liquid stream containing isocyanate-reactive components such as polyol, polyamine, imino- and enamino-functional softblocks and chain extender components. Various catalysts can also be included to promote the formation of urethane and isocyanurate linkages.

The reaction system on one hand, desirably possesses a rapid cure time. SRIM, on the other hand, due to the presence of the reinforcing mat, presents special demands since cure times must be long enough to allow mold filling and substantially complete penetration of the reinforcing mat therein so that the reinforcing fibers are fully wetted and the occurrence of voids are minimized, thereby providing a molded composite with good mechanical reinforcement. The individual mat fibers can be quite long relative to reinforcements which might be feasibly incorporated via individual component monomer streams, and can be comparable to or longer than the molded object itself when fully extended. Clearly the flow requirements for SRIM can therefore be quite demanding.

## SUMMARY OF THE INVENTION

This invention provides reaction systems comprising

A. an aromatic organic polyisocyanate; and

B. an isocyanate-reactive composition, comprising:

(1) an isocyanate-reactive softblock component,

(2) a chain extender selected from the group consisting of (i) primary aromatic polyamines wherein each amine group is attached directly to an aromatic ring, said aromatic ring being further substituted with at least one electron withdrawing group, and (ii) secondary diamines,

(3) at least one catalyst for the formation of urethane and/or urea linkages, and

(4) at least one catalyst for the formation of isocyanurate rings, wherein said components (A) and (B) are impingement mixed and injected into a mold containing a mat of reinforcing fibers, thereby producing a reinforced molded object.

The invention further provides molded objects made from the above reaction systems.

The invention provides reaction systems useful in making molded objects such as automobile parts including fenders, deck lids, and hoods, as well as other structural elements. The systems are suitable for use in molding by RIM, yet allow sufficient time to allow good penetration of reinforcing fiber mats placed into the mold prior to impingement mixing and injecting the reaction components into the mold.

## DETAILED DISCUSSION

### Polyisocyanates

Any organic polyisocyanate which can be readily trimerized with conventional catalysts (as described below) may be trimerized to form the mat-reinforced polyisocyanurate polymeric materials in accordance

with the present invention. Typical of the organic polyisocyanates which can be employed in the present invention are those set forth in U.S. Pat. No. 3,711,444 column 3 lines 7 to 45 whose disclosure thereof is incorporated by reference herein.

A useful class of organic polyisocyanates is comprised of a polymethylene polyphenylisocyanate mixture comprising from about 30 percent to about 80 percent by weight of methylenebis(phenylisocyanate) and the remainder of said mixture being polymethylene polyphenylisocyanates of functionality higher than 2; methylenebis(phenylisocyanate) (known in the art as MDI), both the 4,4′-isomer and mixtures of 4,4′- with 2,4′- in various proportions; the various types of liquified 4,4′-methylenebis(phenylisocyanate) such as those disclosed in U.S. Pat. Nos. 3,384,653, 3,394,164 and 3,394,165 wherein storage stable liquid methylenebis-(phenylisocyantes) are obtained by reacting said methylenbis(phenylisocyanates), including the 4,4′- and 2,4′-isomer, and mixtures of aid 4,4′- and 2,4′ isomers in varying proportions with minor amounts of either a trihydrocarbyl phosphate, or dipropylene glycol, or N,N-di(2-hydroxypropyl)aniline respectively; and a liquid prepolymer composition comprising the product obtained by bringing together a polymethylene polyphenylisocyanate containing from about 65 to 85 percent by weight of methylenebis (phenylisocyanate) the remainder of said polymethlene polyphenylisocyanates having a functionality greater than 2 and from about 0.0185 to about 0.15 equivalent, per equivalent of said polyphenylisocyanate of polyoxyethyleneglycol having an average molecular weight from about 200 to about 600 in accordance with U.S. Pat. No. 4,055,548.

Hindered diisocyanates are also useful in this invention, such as

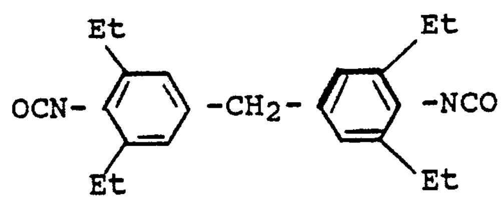

where Et = Ethyl

The trimerization catalyst employed in accordance with the present invention can be any catalyst known in the art which will catalyze the trimerization of the organic polyisocyanate to polyisocyanurate. Further a combination of urethane forming catalyst and trimerization catalyst can be employed if desired.

Typical trimerization catalysts include those disclosed in the Journal of Cellular Plastics, November/December 1975, p. 329; U.S. Pat. Nos. 3,745,133 3,896,052, 3,899,443, 3,903,018, 3,954,684 and 4,126,741 and mixtures of any of the catalysts disclosed therein the disclosures of these references being hereby incorporated by reference herein.

## SOFTBLOCK COMPONENT

Softblock components useful herein include those conventionally known in the art. The term "softblock" is well known to those in the art. It is the soft segment of a polyurethane, polyurea, polyurethaneurea, or polyamide, realizing that these terms are intended to encompass polymers containing isocyanurate rings. Mainly, the softblock component is responsible for the flexibility or elasticity of a polymeric material.

Hydroxy-functional materials useful as reactants which furnish softblock segments herein are well known to those skilled in the art. Such compounds will in general have a molecular weight of at least 1000, preferably 2000 to 8000, a number-averaged hydroxy equivalent weight from 500 to 3000, preferably from 1000 to 2000, and a number-averaged functionality of hydroxy groups of at least 1.1, preferably from about 2 to about 4. Polyols containing primary or secondary hydroxyl groups are useful in the invention.

Suitable relatively high molecular weight polyether polyols which can be employed herein include those which are prepared by reacting an alkylene oxide, halogen substituted or aromatic substituted alkylene oxide or mixtures thereof with an active hydrogen-containing initiator compound.

Suitable oxides include, for example, ethylene oxide, propylene oxide, 1,2-butylene oxide, 2,3-butylene oxide, styrene oxide, epichlorohydrin, epibromohydrin, mixtures thereof and the like.

Suitable initiator compounds include water, ethylene glycol, propylene glycol, butanediol, hexanediol, glycerine, trimethylol propane, pentaerythritol, hexanetriol, sorbitol, sucrose, hydroquinone, resorcinol, catechol, bisphenols, novolac resins, phosphoric acid, mixtures thereof and the like.

Also suitable as initiators for the relatively high molecular weight polyols include, for example, ammonia,

ethylenediamine, diaminopropanes, diaminobutanes, diaminopentanes, diaminohexanes, diethylenetriamine, triethylenetetramine, tetraethylenepentamine, pentaethylenehexamine, ethanolamine, aminoethylethanolamine, aniline, 2,4-toluenediamine, 2,6-toluenediamine, diaminodiphenyloxide (oxydianiline), 2,4′-diaminodiphenylmethane, 4,4′-diaminodiphenylmethane, 1,3-phenylenediamine, 1,4-phenylenediamine, naphthylene-1,5-diamine, triphenylmethane4,4′,4″-triamine, 4,4′-di(methylamino)-diphenylmethane, 1-methyl12-methylamino-4-aminobenzene, 1,3-diethyl-2,4-diaminobenzene, 2,4-diaminomesitylene, 1-methyl-3,5-diethyl-2,4-di-aminobenzene, 1-methyl-3,5-diethyl-2,6-diaminobenzene, 1,3,5-triethyl-2,6-diaminobenzene, 3,5,3′,5-tetraethyl-4,4′di-aminodiphenylmethane and amine aldehyde condensation products such as the polyphenylpolymethylene polyamines produced from aniline and formaldehyde, mixtures thereof and the like.

Suitable polyester polyols which may be employed herein include, for example, those prepared by reacting a polycarboxylic acid or anhydride thereof with a polyhydric alcohol. The polycarboxylic acids may be aliphatic, cycloaliphatic, aromatic and/or heterocyclic and may be substituted (e.g., with halogen atoms) and/or unsaturated. Examples of carboxylic acids of this kind include succinic acid; adipic acid; suberic acid; azelaic acid; sebacic acid; phthalic acid; isophthalic acid; trimellitic acid; phthalic acid anhydride; tetrahydrophthalic acid anyhydride; hexahydrophthalic acid anhydride; tetrachlorophthalic acid anhydride; endomethylene tetrahydrophthalic acid anhydride; glutaric acid anhydride; maleic acid; maleic acid anhydride; fumaric acid; dimeric and trimeric fatty acids, such as oleic acid, which may be in admixture with monomeric fatty acids, terephthalic acid dimethyl ester; terephthalic acid bisglycol ester and the like. Mixtures of such acids or anhydrides may also be employed.

Examples of suitable polyhydric alcohols include ethylene glycol, 1,2-propylene glycol; 1,3-propylene glycol; 1,4-,1,2- and 2,3-butylene glycole; 1,6-hexane diol; 1,8-octane diol; neopentyl glycol; cyclohexane dimethanol (1,4-bis-hydroxy-methyl cyclohexane) 2-methyl-1,3-propane diol; glycerol; tri-methylol propane; 1,2,6-hexane triol; 1,2,4-butane triol; tri-methylol ethane; pentaerythritol; quinitol; mannitol; sorbitol; methyl glycoside; diethylene glycol; triethylene glycol; tetraethylene glycol; polyethylene glycol; dipropylene glycol; polypropylene glycols; dibutylene glycol; polybutylene glycols and the like. The polyesters may contain some terminal carboxyl groups. It is also possible to use polyesters of lactones such as caprolactone, or hydroxy carboxylic acids such as hydroxy caproic acid.

Examples of suitable high molecular weight active hydrogen-containing materials useful in component (B) as sources of polyurea softblock segments include, but are not limited to, amine terminated polyethers, amine terminated organopolysiloxanes, amine terminated polybutadiene acrylonitrile polymers, amine terminated polymers with hydrocarbon main chain, amine terminated polyamides etc. Suitable amine terminated softblock polymers have a molecular weight of about 2000 to about 12,000 (as measured, for example, by gel permeation chromatography or other art recognized method).

Suitable amine-terminated polyethers are made from an appropriate initiator such as glycerol, ethylene glycol or trimethylolpropane, to which lower alkylene oxides such as ethylene oxide, propylene oxide, butylene oxide or mixtures thereof are added. The resulting hydroxyl terminated polyol is then aminated. When two or more oxides are used, they may be present as random mixtures or as blocks of one or the other polyether. In the amination step secondary hydroxyl groups aminate more easily. Normally, the amination step does not completely replace all of the hydroxyl groups. For use in the invention, compounds having at least 70 percent of the hydroxyl groups converted to primary and/or secondary amine groups are preferred and those having at least 85 percent are most preferred.

If ethylene oxide is used, it is desirable to cap the hydroxyl terminated polyol with a small amount of higher alkylene oxide so that the terminal hydroxyl groups are secondary hydroxyl groups. The polyols so prepared are then reductively aminated by prior art techniques, for example, as disclosed in U.S. Patent Number 3,654,370, incorporated herein by reference.

Suitable amine-terminated polyethers are available commercially under the registered trademark JEFFAMINE from Texaco and include JEFFAMINE D-4000, a 4000 molecular weight primary amine terminated polypropylene oxide diamine; JEFFAMINE D-2000, a 2000 molecular weight primary amine terminated polypropylene oxide diamine; JEFFAMINE T-5000, a 5000 molecular weight primary amine terminated polypropylene oxide triamine; JEFFAMINE T-3000, a 3000 molecular weight primary amine terminated polypropylene oxide triamine; JEFFAMINE ED-2001, a 2000 molecular weight primary amine terminated polyoxypropylene polyoxyethylene copolymer diamine.

In the practice of this invention, a single high molecular weight amine-terminated polyether may be used. A hindered or secondary amine-terminated polyether is preferred. Also, mixtures of high molecular weight amine terminated polyethers such as mixtures of di and tri-functional materials may be used. To prereact softblock with the polyisocyanate, thereby forming an isocyanate-terminated prepolymer which is then further reacted, e.g. with the chain extender, is within the scope of this invention.

Suitable amine terminated organopolysiloxanes include, for example, those represented by the formula
$H_2N\{CH_2\}[-Si\ RR'-O]_n-Si\ RR'-(CH_2)_y-NH_2$
where
R and R′ are aryl groups or alkyl groups containing from 1 to 8 carbon atoms including methyl, ethyl, propyl, butyl, phenyl, pentyl, hexyl, octyl, or branched chains thereof, cyclobutyl, cyclopentyl, cyclohexyl, cycloheptyl, and cyclooctyl, and R and R′ may be the same or different,
x and y have values from about 3 to about 10, and x and y may be the same or different, and
n is selected such that the formula has a molecular weight of at least about 1500.
A specific example of such a polysiloxane material is PS-513, which is commercially available from Petrarch Systems Inc. This is a linear polydimethyl siloxane fluid which contains terminal aminopropyl groups. The material is a diprimary diamine having a molecular weight of about 28,000.

Suitable amine terminated reactive liquid polymers having hydrocarbon main chains are disclosed in U.S. Patent 4,535,147, which is incorporated by reference. An example of such an amine terminated reactive liquid polymer is represented by the formula

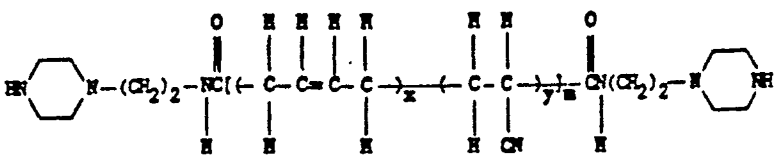

where
x may be 1-10, and
y may be 0-5, and
m is selected such that the formula has a molecular weight of at least 1500.
Such reactive liquid polymers are commercially available from B. F. Goodrich as HYCAR ATBN 1300 x 16 and HYCAR ATBN 1300 x 21.

The imino functional materials useful as reactants which furnish softblock segments herein are disclosed in copending application Serial No. 160,647 filed February 26, 1988, which is herein incorporated by reference. Such imino-functional compounds will in general be an imino-functional aliphatic polyether resin with a molecular weight of at least 1500, preferably 2000 to 8000, and a number-averaged functionality of imino (C = N) groups at least 1.1, preferably from about 2 to about 4.

Many types of imino-functional compounds having a molecular weight of at least 1000 are useful in this invention, including (but not limited to) those listed in Table A, following:

TABLE A

| | TYPE |
|---|---|
| 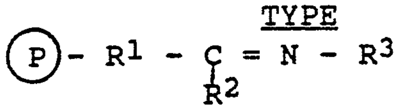 | Simple imine |
| 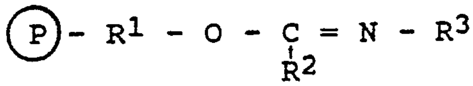 | Imino ester |
| 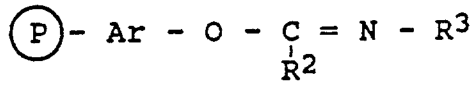 | Imino ester (aromatic) |
| 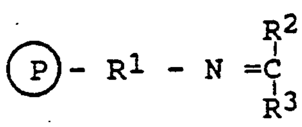 | Simple imine |
| 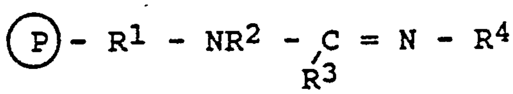 | Amidine |

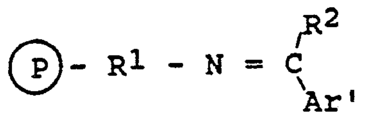

Simple imine (aromatic)

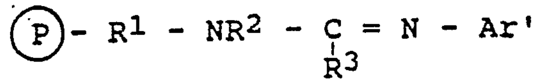

Amidine (aromatic)

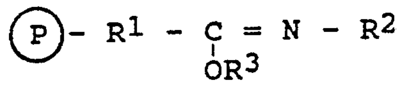

Imino ester (aliphatic)

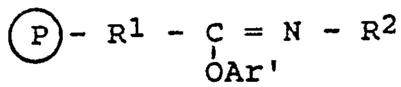

Imino ester (aromatic)

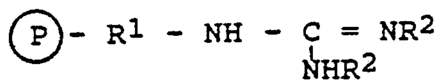

Guanidine

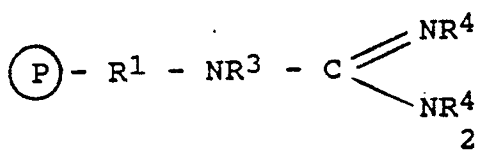

Guanidine

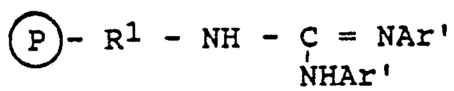

Guanidine (aromatic)

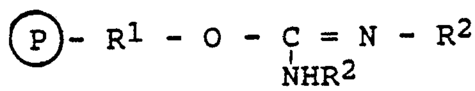

Isourea

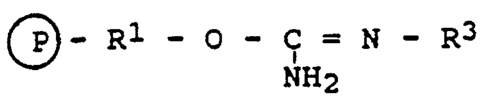

Isourea

wherein:

$R^1$ and Ar are divalent aliphatic and aromatic organic linking groups, respectively;

Ⓟ represents a polyether or hydrocarbon chain or radical, to which said imino (C=N) functional group is attached as indicated by the drawings.

$R^2$ is H or a monovalent organic aliphatic group of 1 to 10 carbons;

$R^3$ and $R^4$ are monovalent aliphatic organic groups of 1 to 10 carbon atoms, and

Ar′ is a monovalent aromatic organic group of 6 to 18 carbon atoms.

These stated groups are well known in the art. Thus $R_1$ may in particular be propylene, Ar methoxyphenylene, $R_2$ propyl, $R_3$ propyl, $R_4$ propyl and Ar′ methoxyphenyl.

It is noted that in the above formulas any two of the three substituents attached to the imino unit can be incorporated as members of a non-aromatic 5 or 6 membered ring. The ring can be carbocyclic or heterocyclic depending, of course, on the particular substituents so incorporated and on whether the carbon or the nitrogen atom (or both) of the imino unit are also incorporated.

When aromatic groups are present in the imino unit it is preferable that they be attached to the carbon atom of said unit and it is most preferred that said aromatic group bear electron donating substituents such as hydroxy, alkoxy N,N-dialkyl-amino etc.

The preparation of these imino functional groups in both cyclic and acyclic forms is well known in the literature.

Isoureas are generally prepared by the reaction of an alcohol with a carbodiimide in the presence of a suitable catalyst. The alcohol component may be aliphatic, as described in E. Schmidt, F. Moosmuller, Lieb. Ann. 597, 235, (1956), or aromatic as in E. Vowinkel, Chem. Ber., 96, 1702, (1963). The catalysts employed in these reactions are frequently chloride salts of copper, such as the use of copper (I) chloride in E. Vowinkel, I. Buthe, Chem. Ber., 107, 1353, (1974), or copper (II) chloride, as in E. Schmidt, E. Dabritz, K. Thulke, Lieb. Ann., 685, 161, (1965).

However the reaction can also be carried out by the addition of an alkaline metal to the alcohol component as exemplified by the use of sodium metal in H.G. Khorana. Canad. J. Chem. 32, 261, 1953.

Guanidines can be prepared by the reaction of an amine with a carbodiimide in a manner similar to that outlined in the references cited above. Alternatively alkylguanidines may be prepared by the reaction of an alkylamine salt with dicyandiamide as in E.A. Werner, J. Bell, J. Chem. Soc., 121, 1790, (1922). In yet another method s-methylthiourea sulphate is combined with an alkylamine as described in "Heterocyclic Chemistry", A. Albert, Althone Press, London, 1968.

A general review of the preparation of imidates is given in "The Chemistry of amidines and imidates", Ed. S. Patai, chapter 9, "Imidates including cyclic imidates", D.G. Neilson, John Wiley, London, 1975. This work includes references to the preparation of the analogous thioimidates.

The preparation of acyclic imidates by the combination of an aliphatic or aromatic nitrile with an alcohol under acidic or basic conditions is described in F.C. Schaefer, G.A. Peters, J. Org. Chem., 26, 412, (1961).

The preparation of cyclic imidates, such as oxazolines and dihydro-1,3-oxazines, by the Ritter reaction (addition of 1,3-diols or epoxides to a nitrile under acid catalysis) is described in "Advances in heterocyclic chemistry", Vol. 6, Ed. A.R. Katritzky, A.R. Boulton, Section II.A, "Heterocyclic synthesis involving nitrilium salts and nitriles under acidic conditions", F. Johnson, R. Madronero, Academic Press, New York, 1966 and references therein. In addition this text teaches the preparation of thioimidates such as thiazolines and dihydro-1,3-thiazines. Methods for the preparation of oxazolines and oxazines are also described in US 3630996 to D. Tomalia, US 3640957 to D. Tomalis and R.J. Thomas, in H. Witte. W. Seeliger. Angew. Chem. Int. Ed., 1972, 287 and in US 3813378 to H. Witte and W. Seeliger.

A general review of the preparation of amidines is given in "The Chemistry of amidines and imidates", Ed. S. Patai, chapter 7, "Preparation and synthetic uses of amidines".

The general class of five membered ring amidines known as imidazolines can be prepared in a manner similar to that outlined above by the combination of a nitrile containing compound with ethylenediamine in the presence of an acid catalyst. Alternatively these materials can be prepared by the combination of ethylenediamine with carboxylic acids under dehydrating conditions. Other methods for the preparation of these materials include the combination of ethylenediamine with thioamides or with an imino ether hydrochloride. These procedures are described in "The Chemistry of Heterocyclic compounds : Imidazole and its Derivatives", Part I, Ed. A. Weissberger, author K. Hofman, Interscience Publishers, New York, 1953 and references therein. Particularly useful for the preparation of imidazoline terminated softblocks from cyanoethylated polyether polyols would be the method outlined in US 4006247 to H.P. Panzer.

The preparation of the homologous tetrahydropyrimidines can be achieved in a similar manner by the use of 1,3-propanediamine as the diamine component. Specific methods are described in "The Chemistry of Heterocyclic Compounds : The Pyrimidines, Supplement I", Ed. A. Weissberger and E.C. Taylor, author D.J. Brown, Interscience Publishers, New York, 1953.

The preparation of an imine can be achieved by any of a number of well documented procedures. In particular these materials can be obtained by the combination of a primary amine with an aldehyde or a ketone under dehydrating conditions. This and numerous alternative methods are contained in "The Chemistry of the Carbon-Nitrogen Double Bond", Ed. S. Patai, Interscience Publishers, London, 1970 and references therein.

Also useful herein as softblock components are enamine-containing compounds such as any of the

preceding which, instead of the isocyanate-reactive groups noted (eg. hydroxy, amine, or imine) have instead enamine functionalities as isocyanate-reactive groups. Thus the compounds can be terminated with

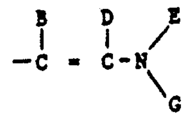 or 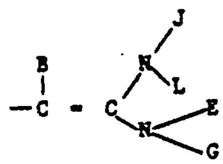

moieties, wherein B, D, E, G, J and L, independently, represent hydrogen or an optionally substituted hydrocarbon, and wherein any of these substitutents may be joined together to form one or more carbocyclic or heterocyclic rings. Especially useful enamino-functional compounds contain two or more enamino groups as a result of any of B, D, E, G, J and L being a radical which is itself enamino-functional. Preferred enamino-functional compounds include enamino-functional polyether resins having molecular weights of at least 1000, preferably 2000 to 8000 and an average enamine functionality of at least 1.1, preferably from about 2 to about 4.

Suitable enamino-functional compounds may be obtained in known manner by reacting a carbonyl compound containing at least one alpha-hydrogen atom, for example an aliphatic, cyclo-aliphatic or araliphatic aldehyde or ketone such as acetaldehyde, propionaldehyde, isobutyraldehyde, caproaldehyde, cyclohexyl aldehyde, acetone, methyl ethyl ketone, benzyl methyl ketone, cyclopentanone, cyclohexanone, trimethylcyclohexanone, mixtures of these and the like with a secondary amine, for example a secondary amino-terminated polymer such as a polyether.

General techniques for the synthesis of enamines have been described in, for example, Org. Coatings and Plastics Chem., 44, 151 and 157, (1981), ACS-PMSE preprints, August/September 1983, 456 and 461, and US Patents 4,342,841 and 4,552,945.

DIAMINE CHAIN EXTENDER

Secondary diamines useful in this invention are known to the art and disclosed, for example, in U.S. Patents 4,578,446 and 4,720,536, to House et al., both patents being herein incorporated by reference.

Useful secondary diamine chain extenders include those having the formula

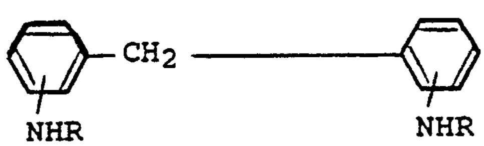

and

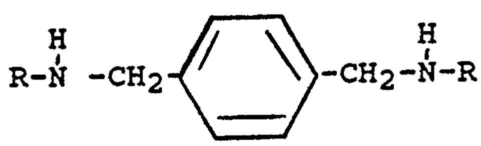

Each alkyl group, R, independently contains from 1 up to about 20 carbon atoms. Alkyl groups containing from 1 to 10 carbon atoms, and especially from 4 to about 8 carbon atoms, are particularly preferred. The alkyl group may be a primary, secondary, or tertiary alkyl group, although when the alkyl is tertiary there is the risk that cure time may be too long to be commercially acceptable. Secondary alkyl groups are preferred, and among these the secondary butyl group is particularly preferred. Of the positional isomers possible the 4,4′-methylenedianilines are most desirable.

Suitable secondary diamines are available commercially from UOP Inc., Des Plaines, Illinois under the trademark UNILINK.

Also useful herein are sterically hindered primary aromatic diamines wherein the nitrogen of each primary amino group is attached directly to an aromatic ring, each said aromatic ring being substituted by at least one election-withdrawing group. Suitable compounds include 3,5-diamino-4-chlorobenzoic acid

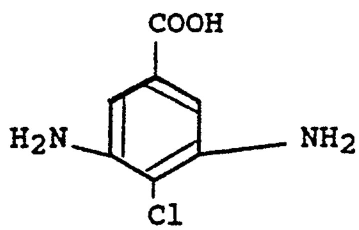

available commercially from Lonza.
4,4′-methylene-bis-(3-chloro-2,6-diethylaniline)

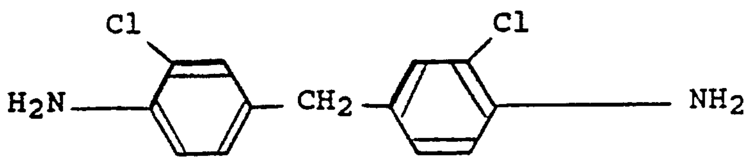

available commercially from Lonza. and
4,4′-methylene-bis-(2-chloroaniline)

The liquid reaction components are processed by the reaction injection molding (RIM) process in a RIM machine. The polymeric molded articles which result comprise the reaction product of two liquid streams, an "A" component, a polyisocyanate, and a "B" component comprising the isocyanate-reactive materials such as softblock and chain extender. Catalysts for the formation of urethane linkages and isocyanurate rings are usually included in the "B" component.

Examples of RIM machines include those manufactured by Admiral Equipment Corp.. Akron, Ohio, by Cincinnati Milacron Corp., Cincinnati, Ohio, Battenfeld Corporation, Mienerzhajen, West Germany and by Krauss Maffei GmbH, West Germany, among others.

The "A" and "B" Components are placed in separate containers, which are generally equipped with agitators, of the RIM machine wherein the temperature of the "A" and "B" Components are 20° to 80° C.

The "A" Component and "B" Component are impingement mixed in a forced mix head such as, for example, a Krauss-Maffei mix head. The "A" and "B" Components are pumped to the mix head by a metering pump, for example, a Viking Mark 21A, at a discharge pressure from about 4.8 to about 35 M Pa. It is generally necessary to maintain the component streams (A and B) within the pistons (or pumps), mix head, and all conduits connecting these components, at temperatures comparable to those which prevail within the storage tanks. This is often done by heat-tracing and/or by independent recirculation of the components.

The reactants can be all at ambient room temperature (about 20° C) when brought together, or alternatively, one or all of the components can be at an elevated temperature up to about 80° C if a faster reaction is desired.

The impingement-mixed mixture of "A" and "B" components is pumped into a mold in which a random mat of structural fibers has been placed. Glass is preferred as the structural fiber, although other fiber materials can also be used, including carbon, graphite, silicon carbide, alumina, titania, boron, aromatic polyamide, and the like. The final structural fiber-reinforced molded article can contain between about 5 and about 85 wt. % of fibers based on the weight of the article.

After the resin has been molded the curing phase will depend on the particular reactants, catalyst levels, reactant temperature, and the like. Generally speaking, the molded part will be cured for at least 30-120 seconds and at a temperature of at least 30° C. Optionally, the in-mold cure can be followed by a postcure period typically at temperatures of about 125° C for about 1 hr. or by standing at ambient temperatures for 1-24 hours.

Other optional additives can be employed in the reaction such as dispersing agents, flame retardants, colorants, antioxidants and the like.

The following examples are illustrative of the invention but are not intended to be limiting.

| Glossary | |
|---|---|
| LF-168 | Uretonimine modified 4,4′-diphenylmethanediisocyante having an average isocyanate equivalent weight of about 14. Commercially available from ICI Americas Inc. |
| F-5204 | An ethylene oxide tipped diol having a hydroxyl number of about 52, available from ICI |
| Unilink 4200 | Trademark designation for N,N′-dialkylaminodiphenylmethane, available from UOP |
| T-45 | Potassium octoate (a cyclotrimerization catalyst) |
| T-12 | Dibutyltin dilaurate (a urethane catalyst) |
| EG | Ethylene Glycol |

Examples 1-3 which follow were run on a Cannon RIM machine.

A continuous fiberglass strand mat available commercially under the designation M8610 from Owens Corning was used throughout the examples. The mat was placed in the mold prior to injecting the impingement mixed reaction system noted in each example. The reaction system formulation in each example was processed using a Cannon H-100 RIM machine. The mold was center-gated to prevent mat movement. Typical processing conditions were as follows:

| | |
|---|---|
| A-Component temp., °C | 30-35 |
| B-Componet temp., °C | 30-35 |
| Mixing pressure, M Pa | 13.8 |
| A/B weight ratio (i.p. isocyanate/polyol) | 2.67 |
| Mold temp., °C | 95 |
| Mold (sample) thickness, cm. | .049-.23 |
| Demold time, seconds | 30-45 |

Results are presented in Table 1. All materials amounts are given in parts by weight. Specific gravity was determined by water displacement. Shore D hardness was determined according to ASTM D2240. Flexural modulus was determined according to ASTM D790. Tensile strength and elongation was determined according to ASTM D638. Notched Izod Impact was determined according to ASTM D256. Heat distortion temperature (HDT) was determined according to ASTM D648. Glass content was determined according to ASTM D2584.

No post cure for the compositions of Examples 1-3 was employed.

TABLE I

| | Ex 1 | Ex 2 | Ex 3 |
|---|---|---|---|
| LF-168 | 143 | 143 | 143 |
| F-5204 | 54 | 54 | 54 |
| Unilink 4200 | 3.10 | 3.10 | 3.10 |
| T-45 | 0.4 | 0.4 | 0.4 |
| T-12 | 0.05 | 0.05 | 0.05 |
| A-Comp., °C | 30 | 30 | 30 |
| B-Comp., °C | 30 | 30 | 30 |
| Mold Temp., °C | 95-100 | 95-100 | 95-100 |
| Demold Time, sec. | 30 | 30 | 30 |
| % Glass Content | 0% | 30% | 48% |
| Sp.Gr. | 1.218 | 1.420 | 1.605 |
| Flex.Mod. (M Pa x $10^3$) | 2.24 | 6.08 | 10.14 |
| Tensile Strength, M Pa | 37.48 | 85 | 178.4 |
| Elongation, | 2.0% | 2.0% | 2.0% |
| HDT, °C @ 1.82 M Pa | 183.4 | 255 | 274 |
| Notched Izod Impact kg.m. | .076 | 1.5 | 2.18 |
| Sample on Demold | stiff & clear | Tough | Tough |

Example 4 and Comparative Example were run in laboratory equipment employing standard hand casting techniques employing no fiberglass or post-cure.

TABLE II

| | Comparative Example | Ex. 4 |
|---|---|---|
| LF-168 | 143 | 143 |
| F-5204(f-2) | 54 | 54 |
| EG | 3.10 | - |
| Unilink 4200 | - | 3.10 |
| I-45 | 0.4 | 0.4 |
| I-12 | 0.05 | 0.05 |
| A-Comp., °C | RT | RT |
| B-Comp., °C | RT | RT |
| Mold Temp., °C | 95-100 | 95-100 |
| Pot Life, sec. | 30 | 30-32 |
| Demold Time, sec. | 60 | 60 |
| Sp.Gr. | 1.21 | 1.21 |
| Shore D. Hardness | 84-86 | 84-86 |
| Flex.Mod. M Pa x $10^3$ | 1.77 | 1.94 |
| Tensile Strength, M Pa | 24.8 | 37.93 |
| Elongation, % | 1.7 | 2.02 |
| Heat Sag cm/15.24 cms overhand, 200°C/30 min | 0.38 | 0.254 |
| HDI, °C @ 1.82 M Pa | 172 | 197 |
| Notched Izod Impact kg.m. | .066 | .059 |
| Sample on Demold | Stiff & Clear | Stiff & Clear |

## Claims

1. A reaction system for use in producing fiber reinforced molded objects comprising the following reaction components:

A. an aromatic organic polyisocyanate; and

B. an isocyanate-reactive composition, comprising:

(1) an isocyanate-reactive softblock component,

(2) a chain extender selected from the group consisting of (i) primary aromatic polyamines wherein each amine group is attached directly to an aromatic ring, said aromatic ring being further substituted with at least one electron withdrawing group, and (ii) secondary diamines,

(3) at least one catalyst for the formation of urethane linkages, and

(4) at least one catalyst for the formation of isocyanurate rings.

2. A reaction system as defined in claim 1, wherein said polyisocyanate comprises methylenebis (phenylisocyanate), polymethylene polyphenylisocyanate, or a mixture thereof.

3. A reaction system as defined in claim 1, wherein said softblock component is a polyether polyol or a polyester polyol.

4. A reaction system as defined in claim 1, wherein said softblock component is an amine-terminated polyether.

5. A reaction system as defined in claim 1, wherein said softblock component is imino-functional.

6. A reaction system as defined in claim 1, wherein said softblock component is enamine-functional.

7. A reaction system as defined in claim 1, wherein said chain extender B(2)(i) has the formula

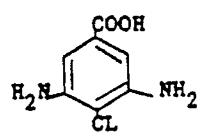

or

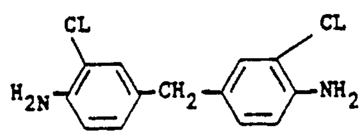

8. A reaction system as defined in claim 1, wherein said chain extender B(2)(ii) has the formula

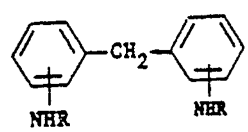

or

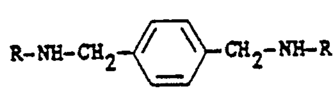

9. A molded article prepared from a reaction system as defined in claim 1.

European Patent Office

# EUROPEAN SEARCH REPORT

Application Number

EP 90 30 3808

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 145 999 (BASF)<br>* Claims 1,6,10; page 5, lines 26-28; page 8, lines 28-32; page 11, lines 1-8,37-39; page 16, line 23 - page 17, line 21; page 18, lines 8-12; page 18, line 40 - page 19, line 15; page 20, lines 29-36 * | 1-3,9 | C 08 G 18/65<br>C 08 G 18/66<br>C 08 G 18/50 |
| Y | US-A-4 801 674 (R.V. SCOTT et al.)<br>* Claims 1,2; column 2, lines 50-54; column 3, lines 39-58; column 4, lines 5-14; column 8, line 48 - column 5, line 13 * | 1-3,8,9 | |
| Y | US-A-4 731 427 (U.E. YOUNES)<br>* Claims 1,12; column 3, line 45 - column 4, line 49; example 2 * | 1-3,8,9 | |
| A | EP-A-0 093 861 (TEXACO)<br>* Claims 1-3; page 6, line 30 - page 7, line 4 * | 1 | |
| A | EP-A-0 288 067 (ASAHI GLASS CO.)<br>* Claims 1,5; page 7, lines 41-48 * | 1 | **TECHNICAL FIELDS SEARCHED (Int. Cl.5)**<br>C 08 G |
| A | EP-A-0 284 912 (BASF)<br>* Claims 1,6,7,11 * | 1 | |
| A | DE-A-1 770 893 (TAKEDA)<br>* Claim 1 * | 1,7 | |
| A | FR-A-2 389 648 (BAYER)<br>* Claims 1,5; page 3, lines 16-27; example 1 * | 1,7 | |

The present search report has been drawn up for all claims

| Place of search | Date of completion of the search | Examiner |
|---|---|---|
| THE HAGUE | 14-08-1990 | VAN PUYMBROECK M.A. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document